# EUROPÄISCHE PATENTSCHRIFT

(11) **EP 1 975 478 B1**
(45) Veröffentlichungstag und Bekanntmachung des Hinweises auf die Patenterteilung: **29.07.2009**
(21) Anmeldenummer: 07006232.8
(22) Anmeldetag: 27.03.2007
(51) Int. Cl.: F16J 15/16, F16J 15/56, F15B 15/14, F15B 15/22, F16F 9/36, F16F 9/49

(54) **Dichtelement und Dichtungsanordnung damit**
Sealing element and corresponding sealing assembly
Elément d'étanchéité et dispositif d'étanchéité

(43) Veröffentlichungstag der Anmeldung: 01.10.2008
(73) Patentinhaber: Carl Freudenberg KG, 69469 Weinheim (DE)
(72) Erfinder: Freitag, Edgar, 34613 Schwalmstadt (DE)

(56) Entgegenhaltungen:
- EP-A- 1 621 780
- DE-A1- 19 502 563
- GB-A- 2 072 797
- US-A- 5 467 689

## Beschreibung

### Technisches Gebiet

Die Erfindung betrifft ein Dichtelement und eine Dichtungsanordnung mit einem solchen Dichtelement.

### Stand der Technik

Dichtelemente und Dichtungsanordnungen damit sind allgemein bekannt, beispielsweise aus der DE 10 2004 036 424 A1. Darin ist ein Hydraulikzylinder mit Endlagendämpfung offenbart, umfassend ein Zylinderrohr mit einem Kolben und einem Druckraum für ein Druckmedium im Inneren des Zylinderrohrs, wobei in einem Einbauraum im Kolben ein Dichtelement für Endlagendämpfung angeordnet ist. Das Dichtelement begrenzt in axialer Richtung einen mit dem Druckmedium gefüllten Ringraum, der während der Endlagendämpfung der Hubbewegung des Kolbens über definierte Drosselöffnungen, die im Dichtelement angeordnet ist, mit dem Druckraum verbunden ist. Die Drosselöffnungen innerhalb des Dichtelements sind derart bemessen, dass sich für die Endlagendämpfung in dem Ringraum ein Druck aufbaut, der deutlich größer ist als der Druck im Druckraum des Druckmittelzylinders. Das Dichtelement ist einstückig ausgebildet und weist im Wesentlichen die Form eines Nutrings auf. Stirnseitig einerseits hat das Dichtelement in Richtung des Ringraums Ventilöffnungen und stirnsetig andererseits Drosselöffnungen, die sich schräg durch das Dichtelement hindurch erstrecken.
Das Dichtelement ist außenumfangsseitig an der Innenwand des Zylinders geführt und wird bei ausfahrendem Kolben durch eine treppenförmige Stufe der Nut auch innenumfangsseitig etwa entlang seiner halben axialen Erstreckung geführt. Bei einfahrendem Kolben hebt sich der Innenumfang demgegenüber vollständig von der treppenförmigen Stufe der Nut ab und begrenzt mit dem Nutgrund einen ersten Strömungskanal.

Nachteilig ist, dass das Dichtelement keine Führungsfunktion übernimmt, dass es Probleme bei der Montage des Dichtelements gibt und dass die Gefahr eines vorzeitigen Ausfalls durch eine zu geringe Abstützung beim Einfahren in die Endlage besteht.

### Darstellung der Erfindung

Der Erfindung liegt die Aufgabe zugrunde, ein Dichtelement und eine Dichtungsanordnung der eingangs genannten Art derart weiter weiterzuentwickeln, dass das Dichtelement einfach an die jeweiligen Gegebenheiten des Anwendungsfalles angepasst werden kann, gute Gebrauchseigenschaften während einer langen Gebrauchsdauer aufweist und dass insbesondere die Gefahr von unerwünschten Verkantungen des Dichtelements in seinem Einbauraum auf ein Minimum begrenzt sind.

Diese Aufgabe wird erfindungsgemäß durch ein Dichtelement und eine Dichtungsanordnung gemäß der Ansprüche 1 und 16 gelöst. Auf vorteilhafte Ausgestaltungen des Dichtelements nehmen die Unteransprüche Bezug.

Zur Lösung der Aufgabe ist ein Dichtelement für Endlagendämpfung in einem Hydraulikzylinder vorgesehen, umfassend ein Gleitelement und ein Anpresselement für das Gleitelement, die einander konzentrisch zugeordnet sind, wobei das Gleitelement auf der dem Anpresselement radial abgewandten Seite zumindest einen ersten Strömungskanal aufweist, wobei das Anpresselement auf der dem Gleitelement radial abgewandten Seite zumindest einen zweiten Strömungskanal aufweist und stirnseitig einerseits einen in sich geschlossenen ringförmigen Dichtwulst und stirnseitig andererseits zumindest einen Anschlagpuffer, der stirnseitig den zweiten Strömungskanal begrenzt.

Die Dichtungsanordnung umfasst ein erstes und ein zweites Maschinenelement, die jeweils hohlzylinderförmig ausgebildet, konzentrisch zueinander angeordnet und relativ translatorisch zu einander hin- und her bewegbar sind und ein Dichtelement für Endlagendämpfung, wobei das Dichtelement ein Gleitelement umfasst und ein Anpresselement für das Gleitelement, die einander konzentrisch zugeordnet sind, wobei das Dichtelement in einer Nut des ersten Maschinenelements angeordnet ist, die radial in Richtung des zweiten Maschinenelements offen ist und das zweite Maschinenelement mit dem Gleitelement anliegend berührt, wobei das zweite Maschinenelement relativ ortsfest mit einem Führungsring für das erste Maschinenelement verbunden ist, wobei mit axialem Abstand benachbart zum Dichtelement, axial in Richtung des Führungsrings, eine Bohrung im ersten Maschinenelement angeordnet ist, die bei translatorischer Bewegung der Maschinenelemente zueinander und erreichen des Führungsrings die Endlagendämpfung auslöst, wobei das Gleitelement und die radial benachbarte Oberfläche des zweiten Maschinenelements zumindest einen Strömungskanal begrenzt, der während der Endlagendämpfung vom Druckmedium durchströmbar ist, wobei das Dichtelement mit axialem Spiel in der Nut hin- und her beweglich angeordnet ist, wobei das Anpresselement und der Nutgrund der Nut zumindest einen zweiten Strömungskanal begrenzen, wobei das Anpresselement auf der der Bohrung axial abgewandten Seite einen in sich geschlossenen ringförmigen Dichtwulst aufweist, der an die der Bohrung axial abgewandte Begrenzungswand der Nut dichtend anlegbar ist und wobei das Anpresselement auf der der Bohrung axial zugewandten Seite zumindest einen Anschlagpuffer aufweist, der stirnseitig den zweiten Strömungskanal begrenzt,
wobei der zweite Strömungskanal mit einem axial vom Gleitelement und dem Führungsring begrenzten Ringraum, am Anschlagpuffer vorbei, stets strömungsleitend verbunden ist und wobei der Anschlagpuffer an die der Bohrung axial zugewandte Begrenzungswand der Nut anlegbar ist.

Bei einem solchen Dichtelement und einer solchen Dichtungsanordnung ist von Vorteil, dass das Dichtelement nicht nur die Endlagendämpfung bewirkt, sondern auch eine gegenseitige Führung der beiden Maschinenelemente bildet. Durch die zweiteilige Ausgestaltung des Dichtelements, umfassend das Gleitelement und das Anpresselement, kann das Dichtelement besonders gut an die jeweiligen Gegebenheiten des Anwendungsfalles angepasst werden. Das Gleitelement, das beispielsweise aus einem vergleichsweise harten Polyamid besteht und das Anpresselement, das aus einem vergleichsweise weicheren Werkstoff, beispielsweise Polyurethan besteht, können für unterschiedliche Anwendungsfälle in unterschiedlichen Ausgestaltungen unterschiedlich miteinander kombiniert werden. Beispielsweise besteht die Möglichkeit, das Gleitelement, das den ersten Strömungskanal begrenzt, an die Viskosität des Druckmediums oder an die Endlagendämpfungs-Charaktetistik durch eine entsprechende Gestalt des ersten Strömungskanals anzupassen. Diese Anpassung kann erfolgen, ohne dass zwangsläufig das Anpresselement verändert werden müsste. Das Druckmedium kann durch ein Hydrauliköl gebildet sein.

Zusätzlich oder alternativ kann auch das Anpresselement durch seine Ausgestaltung und/oder die Wahl des Materials an den jeweiligen Anwendungsfall angepasst werden. Der zweite Strömungskanal bewirkt eine rasche Relativbewegung der beiden Maschinenelemente relativ zueinander aus der Endlage heraus.

Der ringförmige Dichtwulst legt sich während der Endlagendämpfung unter elastischer Vorspannung dichtend an die axial angrenzende Begrenzungswand der Nut an, die den Einbauraum für das Dichtelement bildet. In axialer Richtung andererseits bewirkt der vom Druckmedium stets umströmbare Anschlagpuffer, dass stets eine strömungsleitende Verbindung zwischen dem zweiten Strömungskanal und dem Ringraum besteht.

Das Gleitelement und das Anpresselement können durch eine Verdrehsicherung relativ unverdrehbar miteinander verbunden sein. Die Verdrehsicherung bewirkt bevorzugt nicht nur eine Sicherung gegen Verdrehung von Gleitelement und Anpresselement relativ zueinander, sondern auch eine Sicherung gegen eine unerwünschte axiale Verschiebung der beiden Teile relativ zueinander. Dadurch ist sichergestellt, dass Gleitelement und Anpresselement während der bestimmungsgemäßen Verwendung stets optimal zueinander positioniert sind. Für eine gute Funktion des Dichtelements, insbesondere bezüglich der Endlagendämpfung, ist das unabdingbar.

Die Verdrehsicherung kann durch radial vorspringende Vorsprünge und radial zurückversetzte Ausnehmungen im Gleitelement und im Anpresselement gebildet sein, die jeweils in kongruent gestaltete radial zurückversetzte Ausnehmungen und radial vorspringende Vorsprünge von Anpresselement und Gleitelement formschlüssig eingreifen. Eine formschlüssige Verbindung von Gleitelement und Anpresselement ist eine einfache und kostengünstige Möglichkeit, die beiden Teile, aus denen das Dichtelement besteht, relativ unbeweglich miteinander zu verbinden, wobei trotzdem die Möglichkeit besteht, unterschiedliche Gleitelemente mit unterschiedlichen Anpresselementen zur Erzielung individueller Gebrauchseigenschaften miteinander zu kombinieren.

Für die meisten Anwendungsfälle ist es vorteilhaft, dass mehrere erste und zweite Strömungskanäle und Anschlagpuffer vorgesehen sind, die gleichmäßig in Umfangsrichtung verteilt angeordnet sind. Durch die gleichmäßige Verteilung in Umfangsrichtung wird die Gefahr einer Verkantung des Dichtelements in seinem Einbauraum bei einseitiger Druckbeaufschlagung auf ein Minimum reduziert.

Die zweiten Strömungskanäle können eine axiale Länge aufweisen, die der axialen Länge des Anpresselements entspricht. Die Drosselung des Druckmediums kann durch die große Länge, falls der jeweilige Anwendungsfall dies erfordert, besonders effizient erfolgen.

Die zweiten Strömungskanäle können in gedachten Radialebenen mit den Vorsprüngen des Anpresselements angeordnet sein, wobei die zweiten Strömungskanäle in Zahl und Position, in Umfang- und radialer Richtung betrachtet, der Zahl und entsprechenden Position der Vorsprünge des Anpresselements entsprechen. Durch einen solche Ausgestaltung weist das Anpresselement entlang seines gesamten Umfangs eine weitgehend konstante Materialstärke auf; eine unerwünschte Materialschwächung/Materialanhäufung wird dadurch verhindert, dass die zweiten Strömungskanäle in Zahl und Position, in Umfangs- und radialer Richtung betrachtet, der Zahl und entsprechenden Position der Vorsprünge des Anpresselements entsprechen.

In Umfangsrichtung betrachtet, können zwischen den zweiten Strömungskanälen die Anschlagpuffer angeordnet sein. Dadurch wechseln sich, jeweils gleichmäßig in Umfangsrichtung verteilt, die zweiten Strömungskanäle und die Anschlagpuffer ab, wobei jeweils ein Anschlagpuffer gleichmäßig in Umfangsrichtung beiderseits im gleichen Abstand von zweiten Strömungskanälen angeordnet ist. Diese Symmetrie bedingt vorteilhafte Gebrauchseigenschaften, wie beispielsweise eine gleichmäßige Anströmung der zweiten Strömungskanäle mit Druckmedium.

Das Gleitelement und das Anpresselement bilden bevorzugt eine vormontierbare Einheit. Die Montage des Dichtelements ist dadurch vereinfacht und die Gefahr von Montagefehlem auf ein Minimum begrenzt.

Eine weitere Vereinfachung der Montage des Dichtelements kann dadurch erreicht werden, dass das Dichtelement einen im Wesentlichen Z-förmigen Stufenschnitt aufweist. Das Dichtelement ist in einem solchen Fall auch dann montierbar, wenn es nicht von der Stirnseite auf eines der Maschinenelemente aufgeschoben werden kann; die Montage kann auch beispielsweise auf eine montierte Welle erfolgen, dadurch, dass das Dichtelement durch den im Wesentlichen Z-förmigen Stufenschnitt zunächst elastisch aufgeweitet und anschließend auf die Stange aufgeschnappt wird.

Das Gleitelement kann beispielsweise aus Polyamid bestehen, aus POM oder PE und/oder das Anpresselement aus Polyurethan, TPE oder Gummi.

Das Gleitelement und das Anpresselement können materialeinheitlich und einstückig ausgebildet sein. Die Herstellung ist besonders einfach, und die Werkzeugkosten sind sehr gering.

Das Gleitelement und das Anpresselement können aus einem polymeren Werkstoff bestehen, besonders bevorzugt aus Polyamid. Für Anwendungsfälle, in denen die Funktion eines Anpresselements von eher untergeordneter Bedeutung ist, ist eine solche Ausgestaltung von Vorteil, da gleich bleibend gute Gebrauchseigenschaften während einer langen Gebrauchsdauer bestehen.

Der Dichtwulst kann durch einen separat erzeugten Dichtring gebildet sein, der mit dem Anpresselement kraft und/oder formschlüssig verbunden ist. Bevorzugt erfolgt die Verbindung formschlüssig, beispielsweise dadurch, dass der Dichtring in die Stirnseite des Anpresselements eingeclipst wird.

Der Dichtring kann als O-Ring ausgebildet sein. Die aus einem gummielastischen Werkstoff bestehenden O-Ringe sind in sehr vielen Größen kostengünstig verfügbar. Der Dichtring hat einerseits die Aufgabe, die als Einbauraum ausgebildete Nut abzudichten und andererseits dafür zu sorgen, dass bei einer Axialverlagerung von Gleit- und Anpresselement innerhalb der Nut kein harter Anschlag erfolgt, sondern dass das aus Gleitelement und Anpresselement bestehende Dichtelement dämpfend an die Begrenzungswandung der Nut anlegbar ist.

Ein Ausführungsbeispiel des erfindungsgemäßen Dichtelements und der erfindungsgemäßen Dichtungsanordnung wird nachfolgend anhand der Figuren näher erläutert.

### Kurzbeschreibung der Zeichnung

Diese zeigen in schematischer Darstellung:
- Fig. 1 bis 4: Eine erfindungsgemäße Dichtungsanordnung mit dem erfindungsgemäßen Dichtelement in unterschiedlichen Betriebszuständen,
- Fig. 5 und 6: ein Ausführungsbeispiel des erfindungsgemäßen Dichtelements, jeweils in geschnittener Darstellung,
- Fig. 7 und 8: das Dichtelement aus den Figuren 5 und 6, jeweils in perspektivischer Ansicht,
- Fig. 9 und 10: das Anpresselement und das Gleitelement, jeweils als Einzelteil und in perspektivischer Darstellung,
- Fig. 11: ein weiteres Ausführungsbeispiel eines erfindungsgemäßen Dichtelements in perspektivischer Ansicht.

### Ausführung der Erfindung

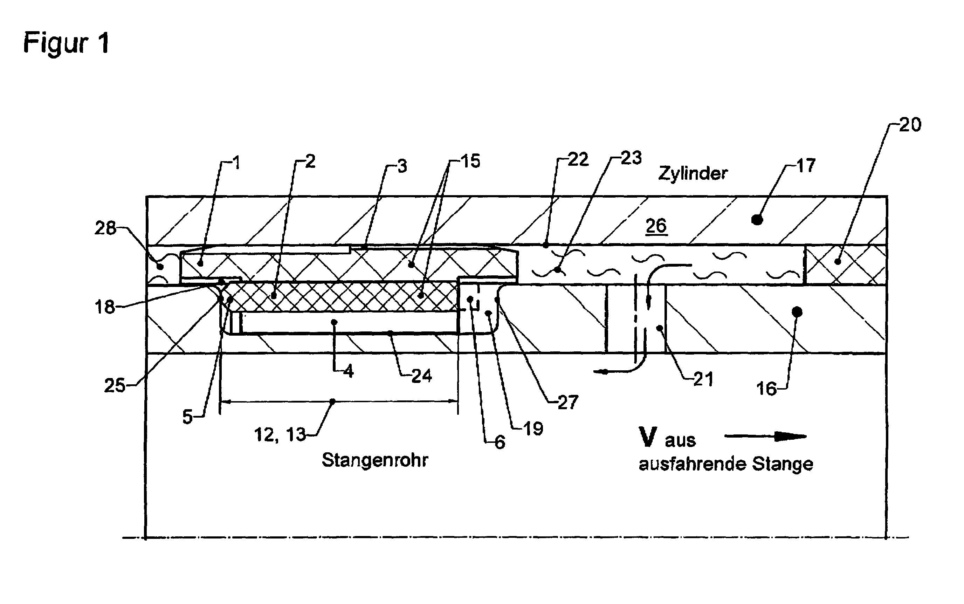

In den Figuren 1 bis 4 ist ein Ausführungsbeispiel einer erfindungsgemäßen Dichtungsanordnung mit einem Ausführungsbeispiel eines erfindungsgemäßen Dichtelements 18 gezeigt, jeweils in voneinander abweichenden Betriebszuständen. In dem gezeigten Ausführungsbeispiel ist das erste Maschinenelement 16 als Kolben/Plunger ausgebildet und das zweite Maschinenelement 17 als Zylinder, wobei sowohl das erste 16 als auch das zweite Maschinenelement 17 jeweils hohlzylinderförmig ausgebildet und konzentrisch zueinander angeordnet sind. Das zweite Maschinenelement 17 umschließt das erste Maschinenelement 16 mit radialem Abstand außenumfangsseitig, wobei in dem durch den Abstand gebildeten Spalt 28 das Dichtelement 18 angeordnet ist. Das erste 16 und das zweite Maschinenelement 17 sind relativ translatorisch zueinander hin- und her beweglich.

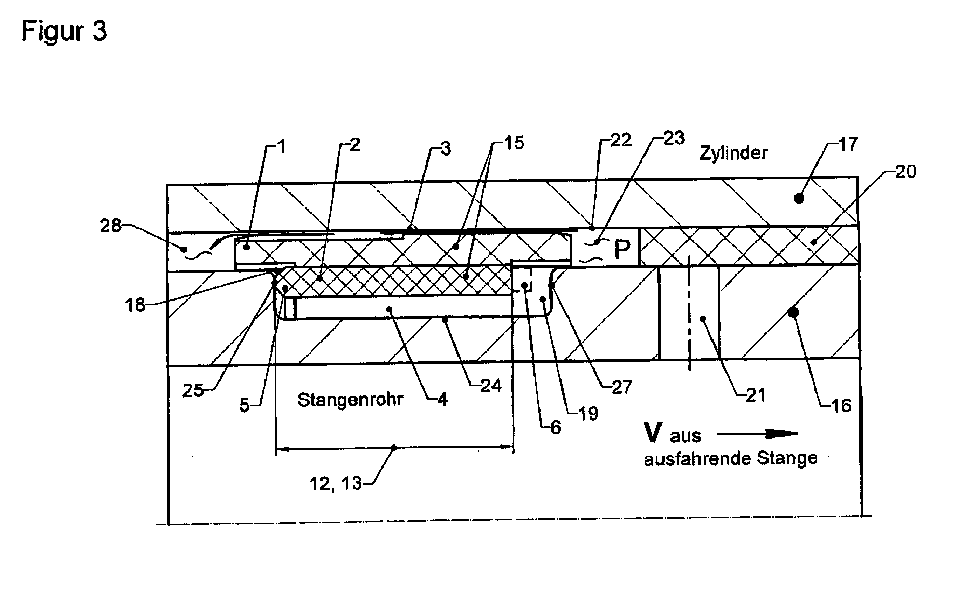

Die erfindungsgemäße Ausgestaltung des Dichtelements 18 bewirkt eine Endlagendämpfung, die in Figur 3 dargestellt ist und eine gegenseitige Führung der beiden Maschienenelemente 16,17.

Wie in den Figuren 1 bis 10 gezeigt ist, umfasst das Dichtelement 18 ein Gleitelement 1, das in dem hier gezeigten Ausführungsbeispiel aus einem Polyamid besteht. Das Gleitelement 1 umschließt das Anpresselement 2 außenumfangsseitig. Das Anpresselement 2 besteht in dem hier gezeigten Ausführungsbeispiel aus einem Polyurethan. Eine Aufgabe des Anpresselements 2 ist die radiale Anpressung des Gleitelements 1 an die Oberfläche 22 des zweiten Maschinenelements 17.

Das Dichtelement 18 ist in einer Nut 19 des ersten Maschinenelements 16 angeordnet, wobei die Nut 19 radial in Richtung des zweiten Maschinenelements 17 offen ist. Das Dichtelement 18 ist mit axialem Spiel in der Nut 19 hin- und her beweglich angeordnet, wie nachfolgend anhand der unterschiedlichen Betriebszustände näher beschrieben wird.

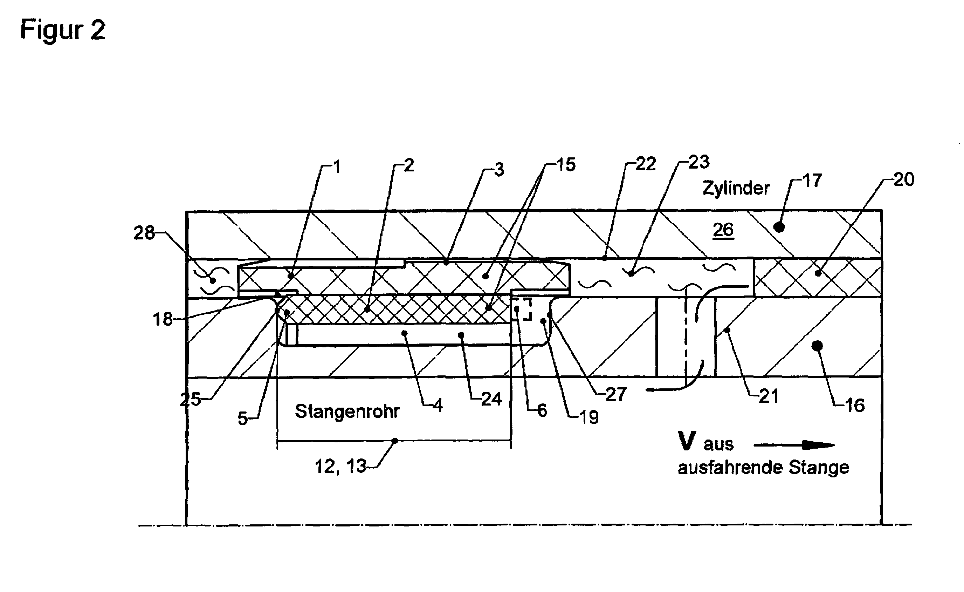

Das zweite Maschinenelement 17 und das erste Maschinenelement 16 sind nicht nur durch den Führungsring 20 relativ zueinander geführt, sondern auch durch das Dichtelement 18. Mit axialem Abstand benachbart zum Dichtelement 18 ist axial in Richtung des Führungsrings 20 eine Bohrung 21 innerhalb des ersten Maschinenelements 16 angeordnet, die bei translatorischer Bewegung der Maschinenelemente 16, 17 zueinander und erreichen des Führungsrings 20 (Fig. 2 und 3) die Endlagendämpfung auslöst.

Das Gleitelement 1 und die radial benachbarte Oberfläche 22 des zweiten Maschinenelements 17 begrenzen mehrere gleichmäßig in Umfangsrichtung verteilt angeordnete erste Strömungskanäle 3, 3.1, 3.2, ... mit jeweils definiertem Drosselquerschnitt, die während der Endlagendämpfung vom Druckmedium 23, das sich im Inneren des zweiten Maschinenelements 17 befindet, durchströmbar sind.

Außer den ersten Strömungskanälen 3, 3.1, 3.2, , .. sind zweite Strömungskanäle 4, 4.1, 4.2, ... vorgesehen, die vom Anpresselement 2 und dem Nutgrund 24 der Nut 19 begrenzt und ebenfalls gleichmäßig in Umfangsrichtung verteilt angeordnet sind.

Das Anpresselement 2 ist auf der der Bohrung 21 axial abgewandten Seite mit einem in sich geschlossenen ringförmigen Dichtwulst 5 versehen, der an die axial angrenzende Begrenzungswand 25 der Nut 19, abhängig vom jeweiligen Betriebszustand, anlegbar ist. Auf der axial gegenüberliegenden Stirnseite der Begrenzungswand 25 sind mehrere gleichmäßig in Umfangsrichtung angeordnete Anschlagpuffer 6, 6.1, 6.2, ... angeordnet. Der Ringraum 26, axial zwischen dem Dichtelement 18 und dem Führungsring 20, ist stets strömungsleitend mit den zweiten Strömungskanälen 4, 4.1, 4.2, ... verbunden, auch dann, wenn die Anschlagpuffer 6, 6.7, 6.2, ... die axial benachbart angeordnete Begrenzungswand 27 der Nut 19 anliegend berühren.

In Fig. 1 der Betriebszustand gezeigt, bei dem das erste Maschinenelement 16, also der Kolben, zusammen mit dem montierten Dichtelement 18 bezogen auf das zweite Maschinenelement 17, also den Zylinder, nach rechts bewegt wird.

In diesem Betriebszustand wird Druckmedium 23 aus dem Ringraum 26 durch die Bohrung 21 gefördert und das Dichtelement 18 liegt, durch die Relativbewegung des ersten Maschinenelements 16 zum zweiten Maschinenelement 17 vergleichsweise leicht mit dem Dichtwulst 5 an der Begrenzungswand 25 der Nut 19 an.

In Fig. 2 bewegt sich das erste Maschinenelement 16, genauso wie in Fig. 1, weiter nach rechts. Sowohl die Bohrung 21 als auch das Dichtelement 18 nahem sich dadurch dem Führungsring 20. In dieser Darstellung ist gut zu erkennen, dass die Führung der beiden Maschinenelemente 16, 17 nicht nur durch den Führungsring 20 sondern auch durch das Dichtelement 18 bewirkt wird.

Bei weiterer Bewegung des ersten Maschinenelements 16 nach rechts, bezogen auf das zweite Maschinenelement 17, bewegt sich die Bohrung 21, durch die das aus dem Ringraum 26 verdrängte Druckmedium 23 bisher in den Zylinderraum geleitet wurde, unter den Führungsring 20, wie in Fig. 3 dargestellt.

In Fig. 3 hat sich das erste Maschinenelement 16, bezogen auf das zweite Maschinenelement 17 soweit nach rechts bewegt, dass die Bohrung 21 vollständig vom Führungsring 20 überdeckt ist. Das im Ringraum 26 befindliche Druckmedium 23 kann nun nicht mehr weitgehend ungehindert mit geringem Strömungswiderstand durch die Bohrung 21 in den Zylinderraum abfließen, sondern nur noch durch die ersten Strömungskanäle 3, 3.1, 3.2, ..., die vom Gleitelement 1 und der radial benachbarten Oberfläche 22 des zweiten Maschinenelements 17 begrenzt sind. Die ersten Strömungskanäle 3, 3.1, 3.2, ... haben, bezogen auf die Bohrung 21, einen deutlich kleineren Querschnitt, so dass es zu einem Druckanstieg innerhalb des Ringraums 26 kommt und dadurch zu einem Abbremsen der nach rechts gerichteten Bewegung des ersten Maschinenelements 16. Durch den Druckanstieg ist das Dichtelement 18 innerhalb der Nut 19 mit vergleichsweise großer Kraft mittels des Dichtwulstes 5 an die Begrenzungswand 25 dichtend angepresst. Aufgrund der Geometrie des Dichtwulsts und des Werkstoffs wirkt dieser zusätzlich dämpfend.

Das erste Maschinenelement 16 fährt endlagengedämpft in seine Endlage, wobei in der Endlage der Druck innerhalb des Ringraums 26 im Wesentlichen dem Atmosphärendruck entspricht. Der Druck sinkt vom Endlagendämpfungsdruck auf Atmosphärendruck oder Betriebsdruck ab.

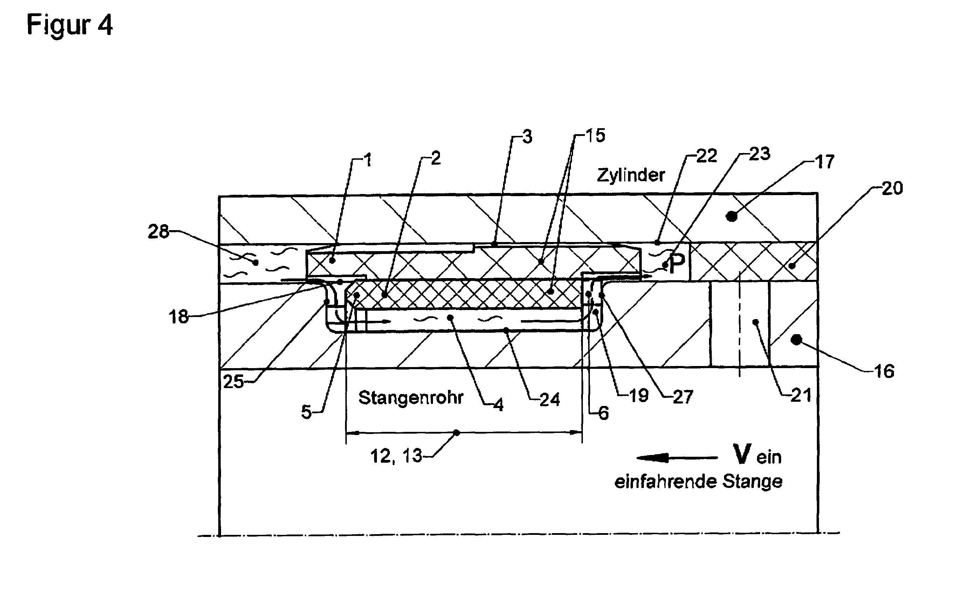

In Fig. 4 ist der Betriebszustand dargestellt, wenn das erste Maschinenelement 16, also der Kolben, aus seiner Endlage heraus in das zweite Maschinenelement 17, also den Zylinder, nach links wieder einfährt.

In diesem Betriebszustand bewegt sich das Dichtelement 18 innerhalb der Nut 19 axial mit seinen Anschlagpuffern 6, 6.1, 6.2,... an die Begrenzungswand 27. Dadurch hebt zwangsläufig der Dichtwulst 5 von der Begrenzungswand 25 ab und Druckmedium 23 strömt am Dichtwulst 5 vorbei durch die zweiten Strömungskanäle 4, 4.1, 4.2, ... an den Anschlagpuffern 6, 6.1, 6.2, ... vorbei in den Ringraum 26 zurück. Der Ringraum 26 füllt sich durch die, bezogen auf die ersten Strömungskanäle 3, 3.1, 3.2, ... vergleichsweise größeren Strömungsquerschnitte der zweiten Strömungskanäle 4,4.1,4.2,... relativ schnell mit Druckmedium 23, so dass während dieses Betriebszustands nur ein sehr geringer Unterdruck entsteht und Sauggeräusche und ein Kraftverlust verhindert werden.

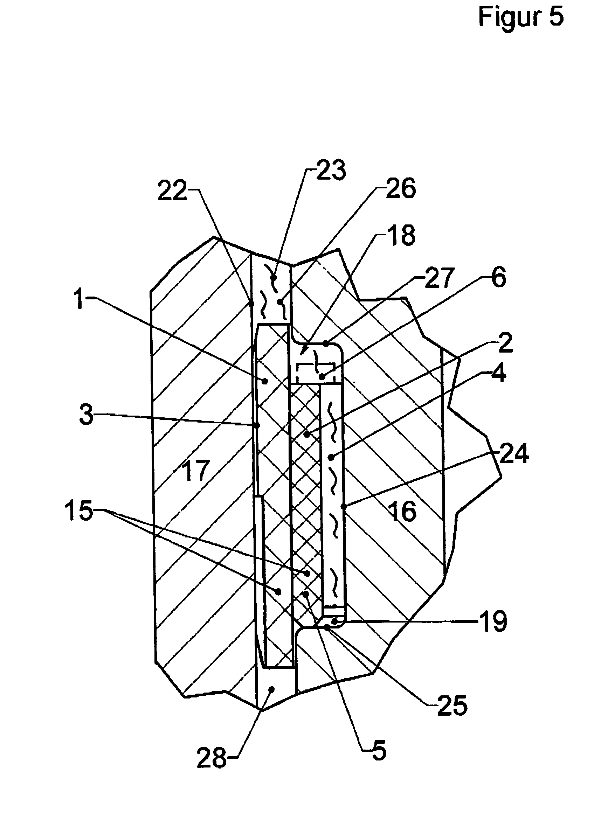

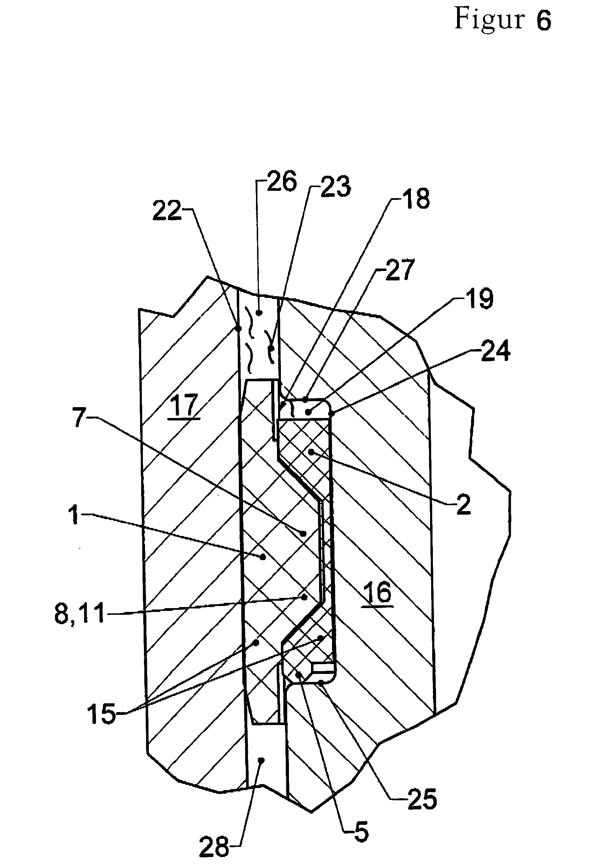

In den Fig. 5 bis 8 ist das Dichtelement 18 aus den Fig. 1 bis 4 näher gezeigt, Das Gleitelement 1 und das Anpresselement 2 sind durch eine Verdrehsicherung 7 sowohl in Umfangsrichtung als auch in axialer Richtung formschlüssig miteinander verbunden. Die Verdrehsicherung 7 wird durch radial vorspringende Vorsprünge 8, 9 und radial zurückversetzte Ausnehmungen 10, 11 im Gleitelement 1 und im Anpresselement 2 erreicht, die jeweils in kongruent gestaltete radial zurückversetzte Ausnehmungen 11, 10 und radial vorspringende Vorsprüngen 9, 8 vom Anpresselement 2 und Gleitelement 1 formschlüssig eingreifen (Fig. 6).

In Fig. 5 sind die Größenverhältnisse der ersten und zweiten Strömungskanäle 3, 3.1, 3.2, ...; 4, 4.1, 4.2, ... gut zu erkennen. Die ersten Strömungskanäle 3, 3.1, 3.2, ..., die für die Endlagendämpfung verantwortlich sind, haben einen sehr viel kleineren Strömungsquerschnitt als die zweiten Strömungskanäle 4, 4,1, 4.2, ..., die für das rasche Füllen des Ringsraums 26 bei Umkehr der Bewegungsrichtung des ersten Maschinenelements 16 aus seiner Endlage verantwortlich sind.

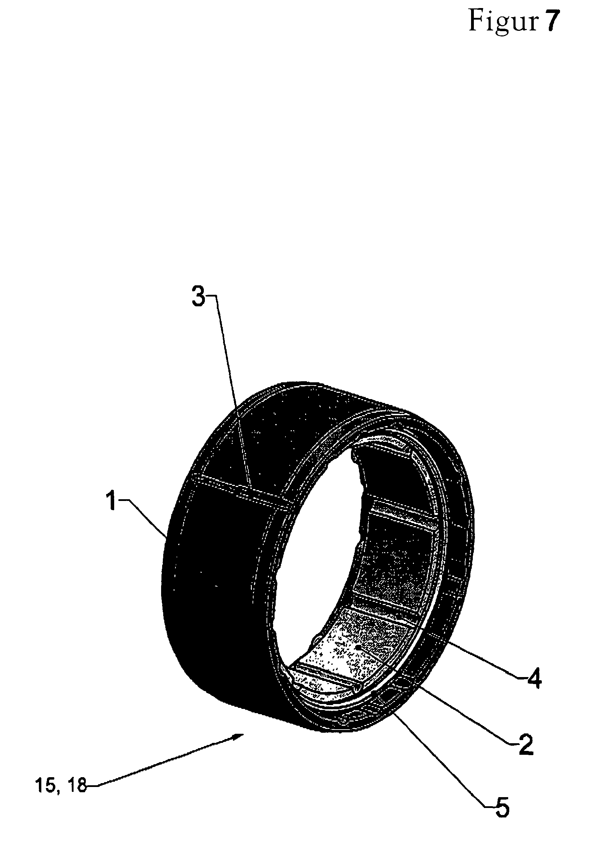

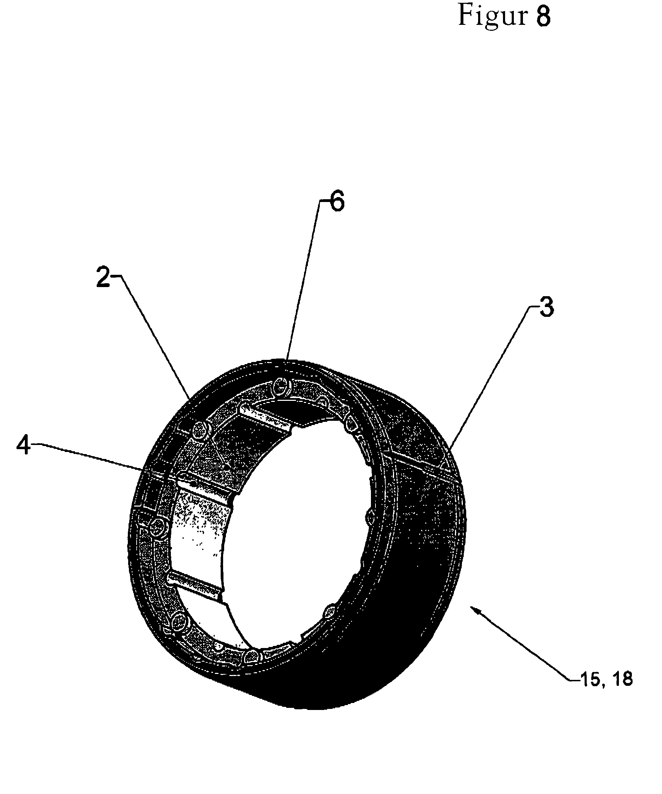

Das Dichtelement 18 aus den Fig. 1 bis 6 ist in den Fig. 7 und 8 in einer perspektivischen Ansicht gezeigt.

In Fig. 7 ist eine Ansicht des Dichtelements 98 von links gezeigt. Der ringförmig in sich geschlossene Dichtwulst 5, der einen Bestandteil des Anpresselements 2 bildet, ist zu erkennen.

In Fig. 8 ist das Dichtelement 18 in einer perspektivischen Ansicht von rechts gezeigt. Hier sind die Anschlagpuffer 6, 6.1, 6.2, ... zu erkennen, die einen einstückigen Bestandteil des Anpresselements 2 bilden.

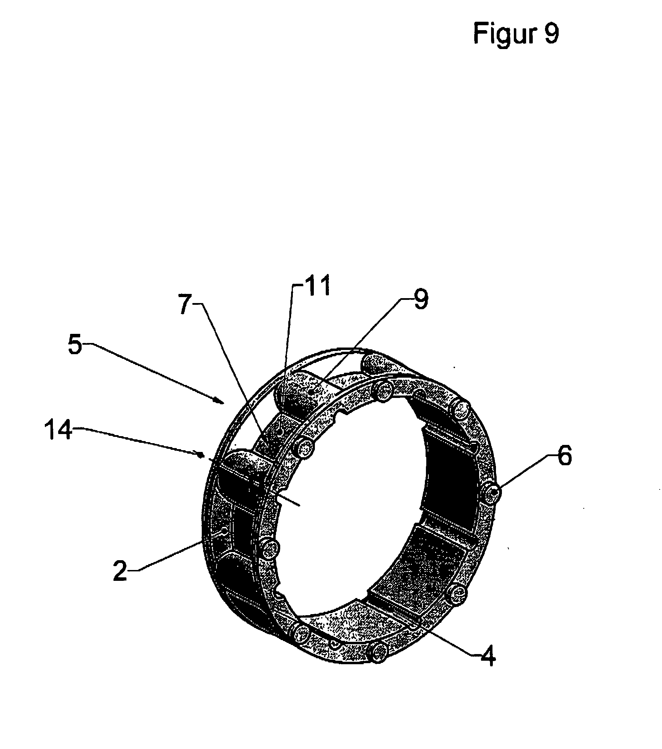

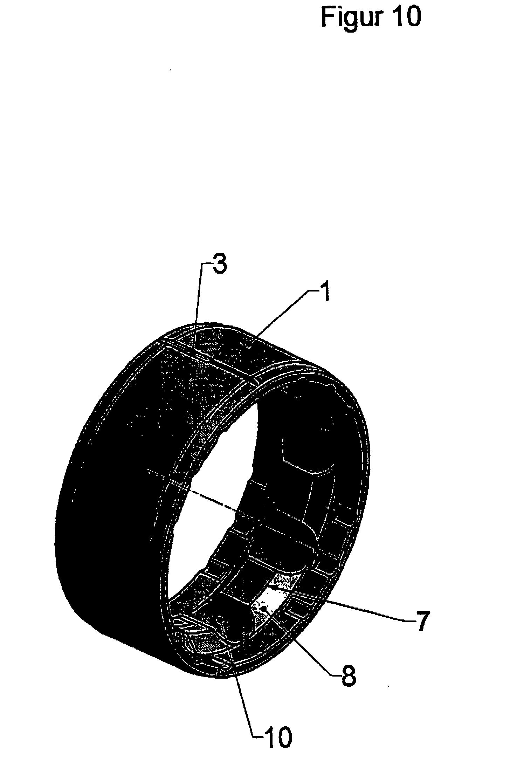

In den Fig. 9 und 10 sind das Anpresselement 2 und das Gleitelement 1, jeweils in einer perspektivischen Ansicht gezeigt.

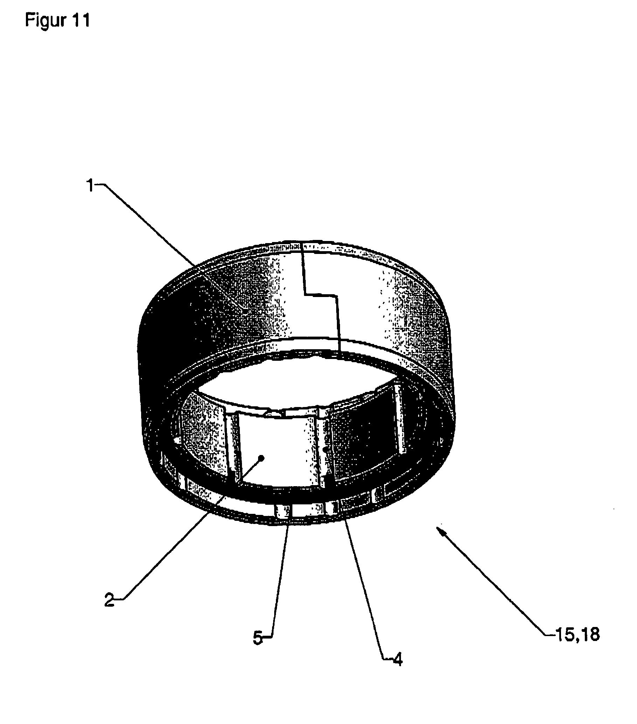

In Fig. 11 ist ein weiteres Ausführungsbeispiel eines Dichtelements gezeigt, das im Wesentlichen dem Dichtelement aus Fig. 7 entspricht. Das Gleitelement 1 und das Anpresselement 2 sind materialeinheitlich und einstückig ausgebildet und bestehen im hier gezeigten Ausführungsbeispiel aus Polyamid. In eine Stirnseite des Anpresselements ist ein als O-Ring ausgebildeter Dichtring eingeschnappt. Der O-Ring bildet eine formschlüssige Verbindung mit dem Anpresselement 2.

## Patentansprüche

1. Dichtelement für Endlagendämpfung in einem Hydraulikzylinder, umfassend ein Gleitelement (1) und ein Anpresselement (2) für das Gleitelement (1), die einander konzentrisch zugeordnet sind, wobei das Gleitelement (1) auf der dem Anpresselement (2) radial abgewandten Seite zumindest einen ersten Strömungskanal (3, 3.1, 3.2, ...) aufweist, wobei das Anpresselement (2) auf der dem Gleitelement (1) radial abgewandten Seite zumindest einen zweiten Strömungskanal (4,4.1, 4.2, ...) aufweist und stirnseitig einerseits einen in sich geschlossenen ringförmigen Dichtwulst (5) und stirnseitig andererseits zumindest einen Anschlagpuffer (6, 6.1, 6.2, ...), der stirnseitig den zweiten Strömungskanal (4, 4.1, 4.2, ...) begrenzt.

2. Dichtelement nach Anspruch 1, **dadurch gekennzeichnet, dass** das Gleitelement (1) und das Anpresselement (2) durch eine Verdrehsicherung (7) relativ unverdrehbar miteinander verbunden sind.

3. Dichtelement nach Anspruch 2, **dadurch gekennzeichnet, dass** die Verdrehsicherung (7) durch radial vorspringende Vorsprünge (8.9) und radial zurückversetzte Ausnehmungen (10, 11) im Gleitelement (1) und im Anpresselement (2) gebildet ist, die jeweils in kongruent gestaltete radial zurückversetzte Ausnehmungen (11, 10) und radial vorspringende Vorsprünge (9, 8) von Anpresselement (2) und Gleitelement (1) formschlüssig eingreifen.

4. Dichtelement nach einem der Ansprüche 1 bis 3, **dadurch gekennzeichnet, dass** mehrere erste und zweite Strömungskanäle (3, 3.1, 3.2, ...; 4, 4.1, 4.2, ...) und Anschlagpuffer (6, 6.1, 6.2, ...) vorgesehen sind, die gleichmäßig in Umfangsrichtung verteilt angeordnet sind.

5. Dichtelement nach einem der Ansprüche 1 bis 4, **dadurch gekennzeichnet, dass** die zweiten Strömungskanäle (4, 4.1, 4.2,...) jeweils eine axiale Länge (12) aufweisen, die der axialen Länge (13) des Anpresselements (2) entspricht.

6. Dichtelement nach einem der Ansprüche 1 bis 5, **dadurch gekennzeichnet, dass** die zweiten Strömungskanäle (4, 4.1, 4.2, ...) in gedachten Radialebenen (14, 14.1, 14.2, ...) mit den Vorsprüngen des Anpresselements (2) angeordnet sind.

7. Dichtelement nach Anspruch 6, **dadurch gekennzeichnet, dass** die zweiten Strömungskanäle (4, 4.1, 4.2, ...) in Zahl und Position, in Umfangs- und radialer Richtung betrachtet, der Zahl und entsprechenden Position der Vorsprünge (9) des Anpresselements (2) entsprechen.

8. Dichtelement nach einem der Ansprüche 1 bis 7, **dadurch gekennzeichnet, dass**, in Umfangsrichtung betrachtet, zwischen den zweiten Strömungskanälen (4, 4.1, 4.2, ...) die Anschlagpuffer (6, 6.1, 6.2, ...) angeordnet sind.

9. Dichtelement nach einem der Ansprüche 1 bis 8, **dadurch gekennzeichnet, dass** das Gleitelement (1) und das Anpresselement (2) eine vormontierbare Einheit (15) bilden.

10. Dichtelement nach einem der Ansprüche 1 bis 9, **dadurch gekennzeichnet, dass** das Gleitelement (1) aus Polyamid besteht.

11. Dichtelement nach einem der Ansprüche 1 bis 9, **dadurch gekennzeichnet, dass** das Anpresselement (2) aus Polyurethan besteht.

12. Dichtelement nach einem der Ansprüche 1 bis 9, **dadurch gekennzeichnet, dass** das Gleitelement (1) und das Anpresselement (2) materialeinheitlich und einstückig ausgebildet sind.

13. Dichtelement nach Anspruch 12, **dadurch gekennzeichnet, dass** das Gleitelement (1) und das Anpresselement (2) aus einem polymeren Werkstoff bestehen.

14. Dichtelement nach einem der Ansprüche 12 oder 13, **dadurch gekennzeichnet, dass** der Dichtwulst (5) durch einen separat erzeugten Dichtring gebildet ist, der mit dem Anpresselement (2) kraft- und/oder formschlüssig verbunden ist.

15. Dichtelement nach Anspruch 14, **dadurch gekennzeichnet, dass** der Dichtring als O-Ring ausgebildet ist

16. Dichtungsanordnung, umfassend ein erstes (16) und eine zweites Maschinenelement (17), die jeweils hohlzylinderförmig ausgebildet, konzentrisch zueinander angeordnet und relativ translatorisch zueinander hin- und her beweglich sind und ein Dichtelement (18) für Endlagendämpfung nach einem der Ansprüche 1 bis 15, wobei das Dichtelement (18) ein Gleitelement (1) umfasst und ein Anpresselement (2) für das Gleitelement (1), die zueinander konzentrisch angeordnet sind, wobei das Dichtelement (18) in einer Nut (19) des ersten Maschinenelements (16) angeordnet ist, die radial in Richtung des zweiten Maschinenelements (17) offen ist und das zweite Maschinenelement (17) mit dem Gleitelement (1) anliegend berührt, wobei das zweite Maschinenelement (17) relativ ortsfest mit einem Führungsring (20) für das erste Maschinenelement (16) verbunden ist, wobei mit axialem Abstand benachbart zum Dichtelement (18), axial in Richtung des Führungsrings (20), eine Bohrung (21) im ersten Maschinenelement (16) angeordnet ist, die bei translatorischer Bewegung der Maschinenelemente (16, 17) zueinander und erreichen des Führungsrings (20) die Endlagendämpfung auslöst, wobei das Gleitelement (1) und die radial benachbarte Oberfläche (22) des zweiten Maschinenelements (17) zumindest einen ersten Strömungskanal (3, 3.1, 3.2, ...) begrenzen, der während der Endlagendämpfung vom Druckmedium (23) durchströmbar ist, wobei das Dichtelement (18) mit axialem Spiel in der Nut (19) hin- und her beweglich angeordnet ist, wobei das Anpresselement (2) und der Nutgrund (24) der Nut (19) zumindest einen zweiten Strömungskanal (4, 4.1, 4.2, ...) begrenzen, wobei das Anpresselement (2) auf der der Bohrung (21) axial abgewandten Seite einen in sich geschlossenen ringförmigen Dichtwulst (5) aufweist, der an die der Bohrung (21) axial abgewandten Begrenzungswand (25) der Nut (19) dichtend anlegbar ist und wobei das Anpresselement (2) auf der der Bohrung (21) axial zugewandten Seite zumindest einen Anschlagpuffer (6, 6.1, 62, ...) aufweist, der stirnseitig den zweiten Strömungskanal (4, 4.1, 4.2, ...) begrenzt, wobei der zweite Strömungskanal (4, 4.1, 4.2, ...) mit einem axial vom Gleitelement (1) und dem Führungsring (20) begrenzten Ringraum (26) am Anschlagpuffer (6, 6.1, 6.2, ...) vorbei, stets strömungsleitend verbunden ist und wobei der Anschlagpuffer (6, 6.1, 6.2, ...) an die der Bohrung (21) axial zugewandten Begrenzungswand (27) der Nut (19) anlegbar ist.

## Claims

1. Sealing element for final position damping in a hydraulic cylinder, said sealing element comprising a sliding element (1) and a clamping element (2) for the sliding element (1), which elements are arranged concentrically with respect to each other, wherein the sliding element (1) has at least one first flow passage (3, 3.1, 3.2, ...) on the side facing radially away from the clamping element (2), wherein the clamping element (2) has at least one second flow passage (4, 4.1, 4.2, ...) on the side facing radially away from the sliding element (1) and, on one end side, a solid, annular sealing bead (5) and, on the other end side, at least one stop buffer (6, 6.1, 6.2, ...) which bounds the end side of the second flow passage (4, 4.1, 4.2, ...) .

2. Sealing element according to Claim 1,
**characterized in that** the sliding element (1) and the clamping element (2) are connected to each other in a relatively non-twistable manner by means of an anti-twist protection means (7).

3. Sealing element according to Claim 2,
**characterized in that** the anti-twist protection means (2) is formed by radially projecting projections (8, 9) and radially set-back recesses (10, 11) in the sliding element (1) and in the clamping element (2), said projections and recesses respectively engaging in an interlocking manner in congruently designed, radially set-back recesses (11, 10) and radially projecting projections (9, 8) of the clamping element (2) and sliding element (1).

4. Sealing element according to one of Claims 1 to 3, **characterized in that** a plurality of first and second flow passages (3, 3.1, 3.2, ...; 4, 4.1, 4.2, ...) and stop buffers (6, 6.1, 6.2, ...), which are distributed uniformly in the circumferential direction, are provided.

5. Sealing element according to one of Claims 1 to 4, **characterized in that** the second flow passages (4, 4.1, 4.2, ...) each have an axial length (12) which corresponds to the axial length (13) of the clamping element (2).

6. Sealing element according to one of Claims 1 to 5, **characterized in that** the second flow passages (4, 4.1, 4.2, ...) are arranged in imaginary radial planes (14, 14.1, 14.2, ...) with the projections of the clamping element (2).

7. Sealing element according to Claim 6,
**characterized in that** the second flow passages (4, 4.1, 4.2, ...) correspond in number and position, as viewed in the circumferential and radial directions, to the number and corresponding position of the projections (9) of the clamping element (2).

8. Sealing element according to one of Claims 1 to 7, **characterized in that**, as viewed in the circumferential direction, the stop buffers (6, 6.1, 6.2, ...) are arranged between the second flow passages (4, 4.1, 4.2, ...).

9. Sealing element according to one of Claims 1 to 8, **characterized in that** the sliding element (1) and the clamping element (2) form a unit (15) which can be preassembled.

10. Sealing element according to one of Claims 1 to 9, **characterized in that** the sliding element (1) is composed of polyamide.

11. Sealing element according to one of Claims 1 to 9, **characterized in that** the clamping element (2) is composed of polyurethane.

12. Sealing element according to one of Claims 1 to 9, **characterized in that** the sliding element (1) and the clamping element (2) are formed from the same material and as a single piece.

13. Sealing element according to Claim 12,
**characterized in that** the sliding element (1) and the clamping element (2) are composed of a polymeric material.

14. Sealing element according to either of Claims 12 and 13, **characterized in that** the sealing bead (5) is formed by a separately produced sealing ring which is connected to the clamping element (2) in a frictional and/or interlocking manner.

15. Sealing element according to Claim 14,
**characterized in that** the sealing ring is designed as an O ring.

16. Sealing assembly comprising a first machine element (16) and a second machine element (17), which are each designed in the form of a hollow cylinder, are arranged concentrically with respect to each other and are movable to and fro relative to each other in a translatory manner, and a sealing element (18) for final position damping according to one of Claims 1 to 15, wherein the sealing element (18) comprises a sliding element (1) and a clamping element (2) for the sliding element (1), said elements being arranged concentrically with respect to each other, wherein the sealing element (18) is arranged in a groove (19) of the first machine element (16), which groove is open radially in the direction of the second machine element (17), and the second machine element (17) is in bearing contact with the sliding element (1), wherein the second machine element (17) is connected in a relatively positionally fixed manner to a guide ring (20) for the first machine element (16), wherein a bore (21) is arranged in the first machine element (16) adjacent to the sealing element (18) at an axial distance therefrom, and axially in the direction of the guide ring (20), said bore triggering the final position damping when the machine elements (16, 17) move relative to each other in a translatory manner and reach the guide ring (20), wherein the sliding element (1) and the radially adjacent surface (22) of the second machine element (17) bound at least one first flow passage (3, 3.1, 3.2, ...) through which the pressure medium (23) can flow during the final position damping, wherein the sealing element (18) is arranged in a manner such that it is movable to and fro with axial play in the groove (19), wherein the clamping element (2) and the base (24) of the groove (19) bound at least one second flow passage (4, 4.1, 4.2, ...), wherein the clamping element (2) has a solid, annular sealing bead (5) on the side facing axially away from the bore (21), which sealing bead can be placed in a sealing manner onto that boundary wall (25) of the groove (19) which faces axially away from the bore (21), and wherein the clamping element (2) has at least one stop buffer (6, 6.1, 6.2, ...) on the side axially facing the bore (21), said stop buffer bounding the end side of the second flow passage (4, 4.1, 4.2, ...), wherein the second flow passage (4, 4.1, 4.2, ...) is connected to an annular space (26), which is bounded axially by the sliding element (1) and the guide ring (20), in a manner such that said flow passage always conducts the flow past the stop buffer (6, 6.1, 6.2, ...), and wherein the stop buffer (6, 6.1, 6.2, ...) can be placed against that boundary wall (27) of the groove (19) which axially faces the bore (21).

## Revendications

1. Elément d'étanchéité pour l'amortissement des positions de fin de course d'un vérin hydraulique, comprenant un élément coulissant (1) et un élément de poussée (2) pour l'élément coulissant (1), ces éléments étant disposés concentriquement l'un par rapport à l'autre, l'élément coulissant (1) présentant sur son côté radialement non tourné vers l'élément de poussée (2) au moins un premier canal d'écoulement (3, 3.1, 3.2, ...), l'élément de poussée (2) présentant sur son côté non tourné radialement vers l'élément coulissant (1) au moins un deuxième canal d'écoulement (4, 4.1, 4.2, ...), et du côté frontal, d'une part un bourrelet d'étanchéité (5) de forme annulaire, intrinsèquement fermé, et du côté frontal, d'autre part au moins un tampon de butée (6, 6.1, 6.2, ...) qui délimite frontalement le deuxième canal d'écoulement (4, 4.1, 4.2, ...).

2. Elément d'étanchéité selon la revendication 1, **caractérisé en ce que** l'élément coulissant (1) et l'élément de poussée (2) sont reliés l'un à l'autre à rotation solidaire par un blocage anti-rotation (7).

3. Elément d'étanchéité selon la revendication 2, **caractérisé en ce que** le blocage anti-rotation (7) est formé par des saillies (8, 9) en débord radial et des découpes (10, 11) en retrait radial formées dans l'élément coulissant (1) et dans l'élément de poussée (2) et qui s'engagent en correspondance géométrique dans des découpes (11, 10) en retrait radial et des saillies (9, 8) en débord radial de forme congruente formées respectivement dans l'élément de poussée (2) et dans l'élément coulissant (1).

4. Elément d'étanchéité selon l'une des revendications 1 à 3, **caractérisé en ce que** plusieurs premiers et deuxièmes canaux d'écoulement (3, 3.1, 3.2, ...; 4, 4.1, 4.2, ...) et tampons de butée (6, 6.1, 6.2, ...) sont prévus et sont répartis uniformément dans le sens périphérique.

5. Elément d'étanchéité selon l'une des revendications 1 à 4, **caractérisé en ce que** les deuxièmes canaux d'écoulement (4, 4.1, 4.2, ...) présentent tous une longueur axiale (12) qui correspond à la longueur axiale (13) de l'élément de poussée (2).

6. Elément d'étanchéité selon l'une des revendications 1 à 5, **caractérisé en ce que** les deuxièmes canaux d'écoulement (4, 4.1, 4.2, ...) sont disposés dans des plans radiaux imaginaires (14, 14.1, 14.2, ...) avec les saillies de l'élément de poussée (2) .

7. Elément d'étanchéité selon la revendication 6, **caractérisé en ce que** vus dans la direction périphérique et la direction radiale, les deuxièmes canaux d'écoulement (4, 4.1, 4.2, ...) correspondent en nombre et en position au nombre et à la position des saillies (9) correspondantes de l'élément de poussée (2) .

8. Elément d'étanchéité selon l'une des revendications 1 à 7, **caractérisé en ce que** vus dans la direction périphérique, les tampons de poussée (6, 6.1, 6.2, ...) sont disposés entre les deuxièmes canaux d'écoulement (4, 4.1, 4.2, ...).

9. Elément d'étanchéité selon l'une des revendications 1 à 8, **caractérisé en ce que** l'élément coulissant (1) et l'élément de poussée (2) forment une unité (15) prémontée.

10. Elément d'étanchéité selon l'une des revendications 1 à 9, **caractérisé en ce que** l'élément coulissant (1) est réalisé en polyamide.

11. Elément d'étanchéité selon l'une des revendications 1 à 9, **caractérisé en ce que** l'élément de poussée (2) est réalisé en polyuréthane.

12. Elément d'étanchéité selon l'une des revendications 1 à 9, **caractérisé en ce que** l'élément coulissant (1) et l'élément de poussée (2) sont réalisés dans le même matériau et d'un seul tenant.

13. Elément d'étanchéité selon la revendication 12, **caractérisé en ce que** l'élément coulissant (1) et l'élément de poussée (2) sont constitués d'un matériau polymère.

14. Elément d'étanchéité selon l'une des revendications 12 ou 13, **caractérisé en ce que** le bourrelet d'étanchéité (5) est formé par une bague d'étanchéité formée séparément et reliée en correspondance mécanique et/ou en correspondance géométrique à l'élément de poussée (2).

15. Elément d'étanchéité selon la revendication 14, **caractérisé en ce que** la bague d'étanchéité est configurée comme joint torique.

16. Système d'étanchéité, qui comprend un premier élément de machine (16) et un deuxième élément de machine (17), tous deux en forme de cylindre creux, disposés concentriquement l'un par rapport à l'autre et aptes à se déplacer en va-et-vient en translation relative l'un par rapport à l'autre, et un élément d'étanchéité (18) pour l'amortissement des positions de fin de course selon l'une des revendications 1 à 15, l'élément d'étanchéité (18) comprenant un élément coulissant (1) et un élément de poussée (2) pour l'élément coulissant (1), ces deux éléments étant disposés concentriquement l'un par rapport à l'autre, l'élément d'étanchéité (18) étant disposé dans une rainure (19) du premier élément de machine (16), ouverte radialement en direction du deuxième élément de machine (17), le deuxième élément de machine (17) étant appliqué en contact sur l'élément coulissant (1), le deuxième élément de machine (17) étant relié solidairement à une bague de guidage (20) du premier élément de machine (16), un alésage (21) ménagé dans le premier élément de machine (16) et qui, lors du déplacement de translation des éléments de machine (16, 17) l'un par rapport à l'autre et lorsqu'il atteint la bague de guidage (20) déclenche l'amortissement de position de fin de course, étant disposé à distance axiale au voisinage de l'élément d'étanchéité (18), axialement dans la direction de la bague de guidage (20), l'élément coulissant (1) et la surface radialement voisine (22) du deuxième élément de machine (17) délimitant au moins un premier canal d'écoulement (3, 3.1, 3.2, ...) qui peut être traversé par un fluide sous pression (23) pendant l'amortissement de la position de fin de course, l'élément d'étanchéité (18) étant disposé avec un jeu axial dans la rainure (19) de manière à pouvoir se déplacer en va-et-vient, l'élément de poussée (2) et le fond (24) de la rainure (19) délimitant au moins un deuxième canal d'écoulement (4, 4.1, 4.2, ...), l'élément de poussée (2) présentant sur son côté non tourné axialement vers l'alésage (21) un bourrelet d'étanchéité (5) de forme annulaire, intrinsèquement fermé, qui peut être appliqué de manière étanche sur la paroi (25) non tournée axialement vers l'alésage (21) et délimitant la rainure (19), l'élément de poussée (2) présentant sur son côté axialement tourné vers l'alésage (21) au moins un tampon de butée (6, 6.1, 6.2, ...) qui délimite frontalement le deuxième canal d'écoulement (4, 4.1, 4.2, ...), le deuxième canal d'écoulement (4, 4.1, 4.2, ...) étant en permanence relié à écoulement au tampon de butée (6, 6.1, 6.2, ...) par un espace annulaire (26) délimité axialement par l'élément coulissant (1) et la bague de guidage (20), le tampon de poussée (6, 6.1, 6.2, ...) pouvant être placé contre la paroi (27) tournée axialement vers l'alésage (21) et délimitant la rainure (19).
